# EUROPEAN PATENT APPLICATION

(11) **EP 4 300 749 A1**
(43) Date of publication of application: **03.01.2024**
(21) Application number: 23180861.9
(22) Date of filing: 22.06.2023
(51) Int. Cl.: H02J 3/28, F17C 5/06, H02J 15/00

(54) **HYDROGEN FUELING STATION**

(30) Priority: 22.06.2022 EP 22180533
(71) Applicant: HyMatters B.V., 6836 ML Arnhem (NL)
(72) Inventor: Tazelaar, Edwin, 6836 ML Arnhem (NL)
(74) Representative: De Vries & Metman

(57) **Abstract**

Fueling station for hydrogen powered devices comprising:
- a hydrogen generator, such as an electrolyser;
- a compressor in communication with the hydrogen generator;
- hydrogen storage containers;
- a feed line extending from the compressor to inlet valves of the one or more hydrogen storage containers;
- a dispensing facility;
- a dispense line connecting the hydrogen storage containers to the dispensing facility, a power connection connecting the hydrogen generator to a power grid fed by intermittent power sources. The power connection is configured to power the hydrogen generator when the power grid is overloaded.

## Description

The invention relates to a hydrogen fueling station for fueling hydrogen powered devices, e.g., fuel cell devices, such as vehicles or stationary appliances. The invention also relates to a process of fueling hydrogen powered devices.

Renewable power sources, such as solar cells or wind turbines, generate an intermittent supply of electricity. This is problematic where such intermittent sources feed the electricity distribution grid and challenge balancing of the grid. Traditionally, electricity grids are configured to distribute centrally generated electricity from a power station to a large number of consumers. Presently, increasing numbers of consumers locally generate electricity by themselves, e.g., by means of solar cells, feeding surplus electricity back to the grid creating a two-way traffic on the grid. Since connected solar cells typically peak simultaneously during moments of sunny weather, mismatches between supply and demand increase and solar cells must be switched off for safety reasons at moments of their highest productivity.

One of the approaches of storing electricity and balancing demand and supply on the grid is to use the peaks for the generation of hydrogen. US 2022/065162 discloses an integrated power plant with a hydrogen generation system and a controller configured to operate the hydrogen generation system with electricity from the grid power system when the grid power system has excess energy. It relates to a peak shaving process for large scale production of electricity on a high voltage network to improve grid stability, e.g., using a frequency control. The supply of wind or solar energy is monitored. If the supply becomes too high, hydrogen production is started up.

It is an object of the invention to provide a system that can effectively be used for grid balancing with a grid at least partly fed by intermittent power supply, e.g., at a low voltage network, fed by a relatively large number of local sources of renewable power without a common control or coordination, such as solar cells of private households, typically using single phase connections.

The object of the invention is achieved with a fueling station for hydrogen powered devices, comprising:
- a hydrogen generator;
- a compressor in communication with an outlet of the hydrogen generator;
- one or more hydrogen storage containers;
- a feed line extending from an outlet of the compressor to inlet valves of the one or more hydrogen storage containers;
- a dispensing facility;
- a dispense line connecting the one or more hydrogen storage containers to the dispensing facility,
- a power connection connecting the hydrogen generator to a power grid, in particular a power grid at least partially fed by intermittent power sources, such as solar cells and/or wind turbines. The power connection can be configured to power the hydrogen generator when the power grid is overloaded, e.g., by peak production of the intermittent power sources. In this respect, the power grid can be considered overloaded when the power quality deviates from predefined specifications as a result from peak supplies by the intermittent power sources. The predefined specification can for example be the specification set out in European standard EN 50160 or US standard IEEE-519. Optionally, sensors can be used to monitor power quality, such as phasor measurement units (PMU's).

More particularly, the power grid can be considered overloaded in case of an overvoltage, e.g., if the voltage exceeds a set value, e.g., if the voltage is more than 10% above nominal design voltage, e.g., if the voltage is more than 253 V for single phase power distribution or 440 V for three-phase power distribution. This can be realized with a self-controlled system. No external control signals are needed to effectively reduce the overload.

This way, load peaks in the power grid, e.g., caused by power supply peaks from intermittent power sources, in particular solar cells, can be used to generate hydrogen to store energy and to balance demand and supply on the power grid.

In a specific embodiment, a plurality of local sources of renewable energy, e.g., solar cells of private households, are connected, for example via a single phase connection, to the power grid, which can for example be a low voltage network.

Some hydrogen fueling stations employ a cascade of hydrogen storage containers. The cascade can for example comprise low, mid and high pressure storage containers. A vehicle can first be connected to the low pressure storage container and equalized, then it can be connected to the mid pressure storage container, and lastly to the high pressure storage container. Such a system optimizes the utilization of stored hydrogen by reducing the amount of hydrogen drawn from the high pressure storage container. This saves energy for compression and cheaper storage tanks can be used for the lower pressure storage containers.

US 2006/118575 relates to multi compressor systems and apparatuses for the manufacture, storage and dispensing of hydrogen fuel to hydrogen powered vehicles. Hydrogen from a hydrogen source is directed to a compressor and subsequently from the compressor to a cascading processing array and from there to a dispensing facility.

According to the present disclosure, a fueling station is provided comprising a cascading array of hydrogen storage containers, each having an inlet valve, a dispense valve, and a re-pressurization valve;
wherein a feed line connects the inlet valves to a compressor and a dispense line connects the dispense valves to a dispensing unit;
the fueling station further comprising a re-pressurization line connecting each of the re-pressurization valves to the feed line via the compressor.

In such a configuration, a single compressor can be used for feeding the hydrogen storage containers and for repressurizing the hydrogen storage containers. Energy consumption by the compressor also contributes to the peak shaving effect.

In a particular embodiment, one or more of the hydrogen storage containers comprises a container head, or cylinder head, encasing the inlet valve, the dispense valve and/or the re-pressurization valve, and solenoids driving the inlet valve, the dispense valve and/or the re-pressurization valve. Such a container head supports the functionality of compression, dispensing and re-pressurization, where dispensing from one or more hydrogen storage containers may be carried out in parallel to compression or re-pressurization in another one or more of the hydrogen storage containers. It also reduces the number of appendices needed for the tubing of multiple hydrogen storage containers and simplifies the routing of the tubing of multiple hydrogen storage containers. Such a container head also increases safety as it reduces the number of locations which are prone to leakage. In addition, certification of systems with multiple hydrogen storage containers is significantly simplified.

The hydrogen generator can for example be an electrolyser connected to a water reservoir by a water feed line. Particularly suitable are PEM electrolysers, which can typically be operated with a variable power feed, e.g., from intermittent power sources.

Optionally, one or more of the hydrogen storage containers can be positioned within the water reservoir feeding the electrolyser, more particularly below water level. With such a configuration, leakage is easy to detect and optimal use is made of the available space.

The present disclosure further pertains to a fueling station for fuel cell devices, the fueling station comprising:
- a hydrogen generator;
- a compressor in communication with an outlet of the hydrogen generator;
- one or more hydrogen storage containers;
- a feed line extending from an outlet of the compressor to inlet valves of the one or more hydrogen storage containers;
- a dispensing facility;
- a dispense line connecting the one or more hydrogen storage containers to the dispensing facility;
- an intermediate hydrogen storage container between the hydrogen generator and the compressor. Such an intermediate storage container serves as a buffer between the electrolyser which can smooth off variations of pressure between the electrolyser and the compressor. It also allows to use a simpler compressor which can be operated by a simple on/off control. The use of such an intermediate hydrogen storage container also helps to prevent low pressure at the discharge side of the electrolyser, which could cause migration of oxygen into the hydrogen discharge flow, increasing a risk of oxygen pollution of the generated hydrogen and eventually the risk of explosion.

The dispensing facility can provide a temporary connection for vehicles to be refueled, or a permanent connection, e.g., for a heating installation or production facility.

The invention is further explained with reference to the accompanying drawing showing an exemplary embodiment.
Figure 1: shows a schematic lay out of an exemplary embodiment of a fueling station of the present invention;
Figure 2: schematically shows container heads with feed, dispense and re-pressurization lines in top view;
Figure 3A: shows a container head in top view;
Figure 3B: shows the container head of Figure 3A in left side view;
Figure 3C: shows the container head of Figure 3A in right side view;
Figure 3D: shows the container head of Figure 3A in rear side view.

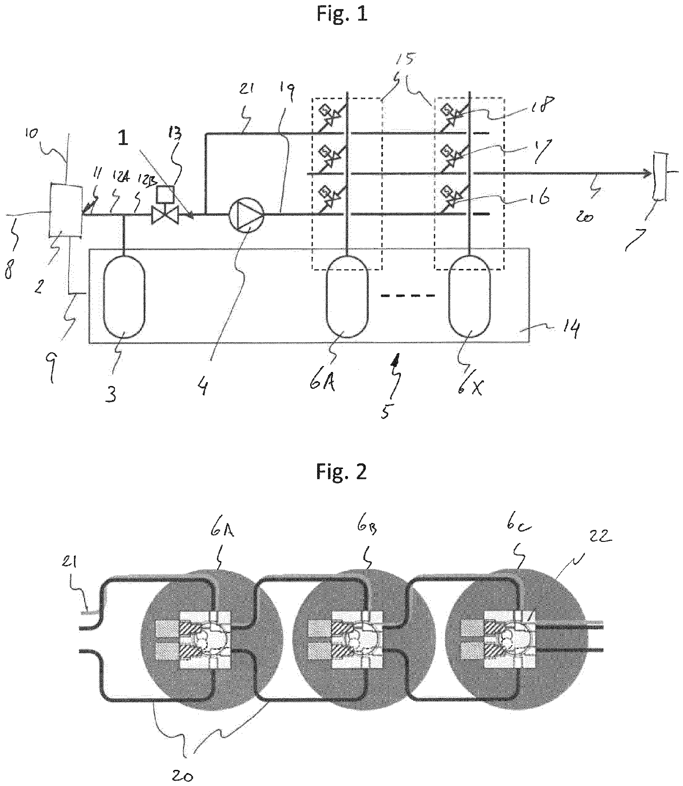

Figure 1 shows a fueling station 1 for generating, storing and dispensing hydrogen to hydrogen powered devices, in particular vehicles. The fueling station 1 comprises an electrolyser 2 serving as a hydrogen generator, an intermediate hydrogen storage container 3, a compressor 4, a cascade 5 of hydrogen storage containers 6A - 6X and a dispensing facility 7.

The electrolyser 2 has a water feed inlet 8, a power feed connection 9, an oxygen outlet 10, and a hydrogen outlet 11. A first line 12A connects the hydrogen outlet 11 to the intermediate hydrogen storage container 3. A second line 12B connects the intermediate hydrogen storage container 3 to a valve 13 and subsequently to the compressor 4.

The cascade 5 can comprise two or more of hydrogen storage containers 6A - 6X. The storage containers 6A - 6X can for example be separate cylinders or tanks or a bundle of tanks in a common container. In Figure 1 only the first hydrogen storage container 6A and the last storage container 6X are shown. Between the first and last hydrogen storage container 6A, 6X, one or more additional hydrogen storage containers can be used. The cascade 5 can for example comprise low, mid and high pressure hydrogen storage containers 6A - 6X. In a particular embodiment the cascade 5 comprises a low pressure container 6A (e.g., 200 bar), a mid-pressure hydrogen storage container (e.g., 350 bar) and a high pressure hydrogen storage container 6X (e.g., 500 or 800 bar).

The hydrogen storage containers 6A - 6X and the intermediate hydrogen storage container 3 are positioned in a water reservoir 14 feeding the electrolyser 2 via the water feed line 9. Each hydrogen storage container 6A - 6X comprises a container head 15 comprising an inlet valve 16, a dispense valve 17 and a repressurizing valve 18. A feed line 19 extends from an outlet of the compressor 4 to the inlet valves 16 of the respective hydrogen storage containers 6A - 6X. A dispense line 20 connects the dispense valves 17 of the respective hydrogen storage containers 6A - 6X to the dispensing facility 7. A re-pressurization line 21 connects each of the re-pressurization valves 18 to the feed line 19 via the compressor 4.

When a vehicle or other device or appliance is operatively connected to the dispensing facility 7, the dispense valve 17 of the low pressure hydrogen storage container 6A is opened and hydrogen is supplied from the low pressure hydrogen storage container 6A to the vehicle until the pressure in the vehicle's fuel tank equals the pressure in the low pressure hydrogen storage tank 6A. The dispense valve 17 is then closed, and the dispense valve 17 of the next hydrogen storage container is then opened. In a final step the vehicle fuel tank is connected to the final hydrogen storage tank 6X by opening the associated dispense valve 17. The pressure in the final hydrogen storage container 6X exceeds the required pressure in the vehicle fuel tank. When the pressure in the fuel tank reaches the desired value (typically 350 bar or 700 bar for cars), the dispense valve 17 is closed off and the vehicle is disconnected from the dispense facility 7.

The hydrogen storage containers 6A - 6X can be refilled by opening the valve 13 and the inlet valves 16 of one or more or all of the hydrogen storage containers 6A - 6X. A hydrogen storage container can also recharge one of the other hydrogen storage containers via the re-pressurization line 21 and the compressor 4 by opening the re-pressurization valve 18 and the inlet valve 16 of the receiving hydrogen storage container while the valve 13 is closed. Although the valve 13 is closed, the electrolyser 2 can still continue producing hydrogen due to the intermediate hydrogen storage container 3.

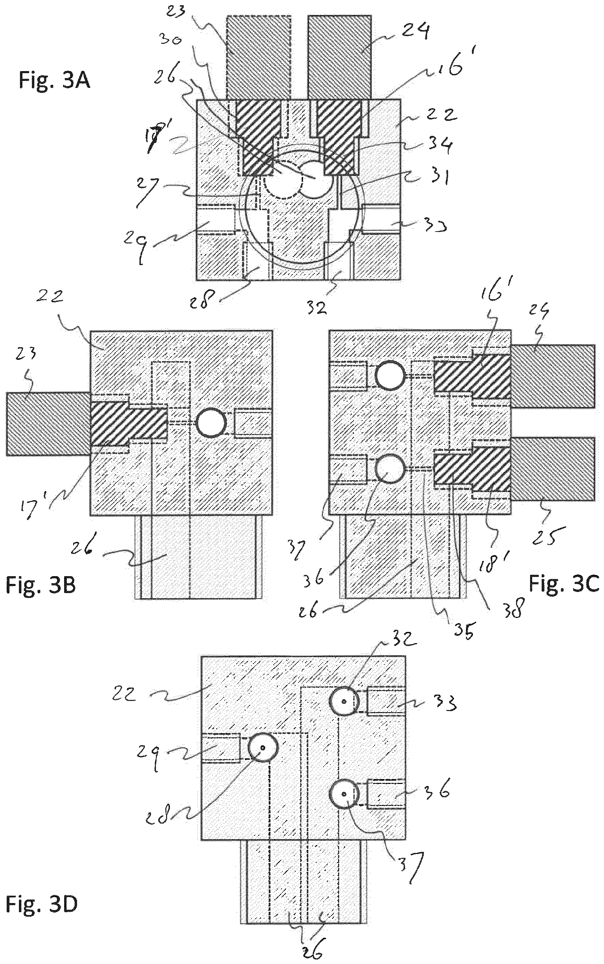

Figure 2 shows an arrangement of three hydrogen storage containers 6A, 6B, 6C with container heads 22 in top view (see also Figure 3A). In the shown embodiment, each container head 22 encases the inlet valve 16', the dispense valve 17' and the re-pressurization valve 18', and solenoids 23, 24, 25 driving the inlet valve 16', the dispense valve 17' and the re-pressurization valve 18' respectively.

Figures 3B and 3C shows opposite side face views of the container head 22, while Figure 3D shows a rear side view. At the left hand side, the container head 22 comprises the dispense valve 17' controlling flow from the respective hydrogen storage container 6A,B,C to the dispense line 20. In Figure 3A, the dispense valve 17' is shown in dotted lines, to indicate that it is lower than the inlet valve 16' (see Figure 3B). An internal channel 26 runs between the hydrogen storage container 6A,B,C and the dispense valve 17', inlet valve 16' and re-pressurization valve 18'. The part of channel 26 leading to dispense valve 17' is shown in dotted lines in Figure 3A since it ends at a lower level than the part of channel 26 leading to inlet valve 16' (see Figure 3D). A first valve channel of reduced diameter 27 connects the dispense valve 17' to an outgoing port 28 of the dispense line 20. An incoming port 29 of the dispense line 20 is connected under an angle, e.g., under right angles, with the outgoing port 28, allowing hydrogen coming from upstream hydrogen storage containers 6A,B to flow through the outgoing port 28 to downstream section of the dispense line 20. The solenoid 23 of the dispense valve 17' moves a valve body 30 between an opening position and a closing position, as shown in the drawing. When the dispense valve 17' is closed, hydrogen can flow from upstream containers 6A,B via the dispense line 20 and the incoming and outgoing ports 29, 28 to the dispensing facility 7, unless the dispense valves 17' of all hydrogen storage containers 6A,B,C are closed. When the dispense valve 17' is opened, hydrogen flows from the hydrogen storage container 6A,B,C via the internal channel 26, the narrow first valve channel 27 and the outgoing port 28 into the dispense line 20.

At the right hand side, the container head 22 comprises the inlet valve 16' and the re-pressurization valve 18' at a distance below the inlet valve 16'. The inlet valve 16' and the re-pressurization valve 18' operate in the same way way as the dispense valve 17'.

The inlet valve 16' controls flow from feed line 19 to the respective hydrogen storage container 6A,B,C. The internal channel 26 runs between the hydrogen storage container 6A,B,C and the inlet valve 16'. A second valve channel of reduced diameter 31 connects the inlet valve 16' to an incoming port 32 of the feed line 19. An outgoing port 33 of the feed line 19 is connected under an angle, e.g., under right angles, with the outgoing port 32, allowing hydrogen coming from upstream hydrogen storage containers 6A,B to flow through the incoming port 32 to downstream section of the feed line 19. The solenoid 24 of the inlet valve 16' moves a valve body 34 between an opening position and a closing position, as shown in the drawing. When the inlet valve 16' is closed, hydrogen can flow from compressor 4 and via upstream containers 6A,B (if present) via the feed line 19 and the incoming and outgoing ports 32, 33. When the inlet valve 16' is opened, hydrogen flows from the feed line 19 via the valve channel 31 and the internal channel 26, into the hydrogen storage 22.

The re-pressurization valve 18' controls flow from the respective hydrogen storage container 6A,B,C via the re-pressurization line 21 to the compressor 4. The internal channel 26 runs between the hydrogen storage container 6A,B,C and the re-pressurization valve 18'. A third valve channel of reduced diameter 35 connects the re-pressurization valve 18' to an incoming port 36 of the re-pressurization line 21. An outgoing port 37 of the re-pressurization line 21 is connected under an angle, e.g., under right angles, with the incoming port 36, allowing hydrogen coming from upstream hydrogen storage containers 6A,B to flow through the outgoing port 37 to downstream sections of the re-pressurization line 21. The solenoid 25 of the re-pressurization valve 18' moves a valve body 38 between an opening position and a closing position, as shown in the drawing. When the re-pressurization valve 18' is closed, hydrogen can flow from upstream hydrogen storage container 6A,B,C via the re-pressurization line 21 and the incoming and outgoing ports 32, 33. When the re-pressurization valve 18' is opened, hydrogen flows from the hydrogen storage container 6A,B,C via the internal channel 26, the valve channel 35 and the outgoing port 37 and the re-pressurization line 21 back to the compressor 4.

## Claims

1. Fueling station for hydrogen powered devices, the fueling station comprising:
- a hydrogen generator;
- a compressor in communication with an outlet of the hydrogen generator;
- one or more hydrogen storage container
- a feed line extending from an outlet of the compressor to inlet valves of the one or more hydrogen storage containers;
- a dispensing facility;
- a dispense line connecting the one or more hydrogen storage containers to the dispensing facility, a power connection connecting the hydrogen generator to a power grid,
**characterized in that** the power connection is configured to power the hydrogen generator when the power grid is overloaded.

2. Fueling station according to claim 1, wherein the power grid is a low voltage network.

3. Fueling station according to claim 1 or 2, wherein a plurality of local sources of renewable energy, e.g., of private households, is connected via a single phase connection to the power grid.

4. Fueling station according to claim 1, 2, or 3, wherein the power connection is configured to power the hydrogen generator if the voltage on the grid exceeds a set value, e.g., if the voltage is more than 10% above nominal design voltage, e.g., if the voltage is more than 253 V.

5. Fueling station according to any one of the preceding claims, comprising a cascading array of hydrogen storage containers, each having an inlet valve, a dispense valve, and a re-pressurization valve;
the fueling station further comprising a re-pressurization line connecting each of the re-pressurization valves to the feed line via the compressor.

6. Fueling station according to claim 5, wherein at least one of the hydrogen storage containers comprises a container head encasing the inlet valve, the dispense valve and/or the re-pressurization valve, and solenoids driving the inlet valve, the dispense valve and/or the re-pressurization valve.

7. Fueling station according to any one of the preceding claims, further comprising a water reservoir feeding the hydrogen generator, wherein at least one of the one or more hydrogen storage containers is within the water reservoir.

8. Fueling station according to any one of the preceding claims, further comprising an intermediate hydrogen storage container between the hydrogen generator and the compressor.

9. Fueling station according to any one of the preceding claims, wherein the hydrogen generator comprises one or more electrolysers, such as one or more PEM electrolysers.
